# FASCICULE DE BREVET EUROPEEN

(11) **EP 2 989 004 B1**
(45) Date de publication et mention de la délivrance du brevet: **01.11.2017**
(21) Numéro de dépôt: 14726699.3
(22) Date de dépôt: 25.04.2014
(51) Int. Cl.: B64C 25/16

(54) **CASE DE TRAIN D'ATTERRISSAGE**
FAHRWERKSCHACHT
LANDING GEAR BAY

(30) Priorité: 25.04.2013 FR 1353783
(43) Date de publication de la demande: 02.03.2016
(73) Titulaire: Akka Ingenierie Produit, 91200 Boulogne-Billancourt (FR)
(72) Inventeur: PELTIER, Louis, 31700 Blagnac (FR); ALLORY, Robin, 13410 Lambesc (FR); RICCI, Maurice, 1050 Bruxelles (BE)
(74) Mandataire: Gaillarde, Frédéric F. Ch.
(86) Numéro de dépôt international: PCT/FR2014/051005
(87) Numéro de publication internationale: WO 2014/174225

(56) Documents cités:
- EP-A1- 1 564 137
- FR-A1- 2 911 321
- FR-A1- 2 922 519

## Description

La présente invention se rapporte à un dispositif d'ouverture et de fermeture d'une case de train d'atterrissage d'un aéronef, et plus particulièrement à une trappe de fermeture, notamment une trappe arrière, d'un tel dispositif.

Une case de train d'atterrissage est un logement destiné à recevoir un train d'atterrissage d'un aéronef.

Dans la plupart des aéronefs de transport de marchandises ou de personnes, la case de train est située dans le fuselage de l'aéronef et est fermée généralement par un système d'ouverture et de fermeture comportant plusieurs trappes.

Il existe plusieurs systèmes d'ouverture et de fermeture.

Classiquement, un système d'ouverture et de fermeture, ou système de trappes, comporte au moins deux trappes principales, par exemple les trappes de train avant, qui s'ouvrent pour permettre la descente du train et se referment lorsque le train est sorti afin de limiter les perturbations aérodynamiques.

Ce système comporte également au moins deux trappes secondaires, par exemple les trappes de train arrière, qui s'ouvrent pour permettre la descente du train et restent ouvertes tant que le train est sorti.

Le système peut aussi comporter une cinquième trappe, appelée trappe centrale ou trappe pantalon, qui, comme les trappes secondaires, reste ouverte tant que le train est sorti. La trappe pantalon est généralement fixée sur le train, plus particulièrement sur une jambe du train.

Une trappe de train d'atterrissage, appelée plus simplement trappe de train, comprend habituellement un panneau fixé sur des bras d'articulation, généralement des cols de cygnes articulés sur la structure de l'aéronef, autour d'un axe de pivotement décalé vers l'intérieur de la case de train par rapport au panneau.

Les cols de cygnes sont généralement répartis sur la longueur de la trappe et fixés, d'une part sur la trappe et, d'autre part, sur la structure de l'aéronef.

Selon les cas, au moins un col de cygne est relié, par l'intermédiaire d'une bielle, à la structure de l'aéronef. Alternativement, les bielles peuvent être fixées aux trappes par d'autres types de ferrures.

Cette bielle permet la réalisation d'un mouvement de rotation de la trappe par rapport au carénage de l'aéronef. Selon les modes de réalisation, il peut également exister un système de renvois intermédiaires visant à limiter les chargements selon la direction longitudinale de l'aéronef et permettant de réduire la tailles des ferrures selon cette direction.

Ainsi, lors de la sortie du train d'atterrissage, le pivotement de la trappe vers l'extérieur du fuselage est obtenu au moyen de la bielle et des articulations en col de cygne.

Alors que les trappes avant sont généralement déplacées par l'intermédiaire d'au moins un actionneur (elles s'ouvrent avant que le train ne descende), chaque trappe secondaire est reliée au train d'atterrissage, par exemple par l'intermédiaire d'une bielle fixée, d'une part, sur le train d'atterrissage (par exemple sur la jambe de train ou sur un triangle d'articulation du train), et, d'autre part, sur la trappe.

Cette bielle permet une manoeuvre de la trappe directement en fonction des mouvements du train d'atterrissage. Ainsi, lors de la rentrée du train d'atterrissage, le fait même que le train d'atterrissage remonte dans la case de train assure la fermeture de la trappe. Il en va de même pour le déploiement du train et l'ouverture des trappes. Alternativement, il est également envisageable d'utiliser un triangle articulé sur la jambe de train à la place de la ou des bielle(s).

Plus précisément, lors de la sortie du train, celui-ci tourne autour d'un axe (formant le triangle d'articulation), entraînant un mouvement de la bielle qui pousse la trappe vers sa position ouverte.

Une telle configuration permet donc de commander en même temps la sortie du train d'atterrissage et l'ouverture de la trappe.

Afin de préserver l'aérodynamisme du fuselage de l'aéronef, l'agencement de l'axe de pivotement du train d'atterrissage est réalisé à l'intérieur de la case de train. Comme mentionné précédemment, les trappes avant se referment après avoir laissé passer le train d'atterrissage afin de minimiser les perturbations aérodynamiques. En raison du passage de la jambe du train, il n'est bien évidemment pas possible de refermer les trappes arrière, qui entraînent donc des perturbations aérodynamiques importantes le long du fuselage de l'aéronef.

Pour ces raisons aérodynamiques, les trappes secondaires ont une surface et une ouverture réduites qui permettent juste le déploiement du train d'atterrissage. Les trappes avant doivent permettrent le passage des roues du train d'atterrissage et sont en général comparativement plus larges.

On connaît également des systèmes à quatre trappes qui ne comprennent alors généralement pas de trappe pantalon.

Dans le cas d'un système à quatre trappes, il y a généralement deux trappes arrière, ou trappes secondaires, et deux trappes avant, ou trappes principales, placées côte à côte.

Les trappes arrière peuvent s'ouvrir de plusieurs manières.

Comme décrit précédemment, les trappes peuvent généralement s'ouvrir latéralement par pivotement.

Divers systèmes d'ouverture de trappes sont décrits dans les documents FR 2 911 321, FR 2 922 519, FR 2 886 620, US 2009/0159743 et US 7 458 542.

Le document FR 2 886 620 décrit un système dans lequel les trappes s'ouvrent latéralement de part et d'autre du fuselage, par pivotement. Les trappes arrière sont rattachées au train d'atterissage, par l'intermédiaire d'une potence d'articulation. Ce système est plus particulièrement destiné aux avions de grande taille, type A380, disposant d'une vaste case de train permettant d'y loger le système d'articulation et la bielle additionnelle. Un tel système est difficile à mettre en oeuvre sur des cases de train d'aéronef de plus petite taille.

Le document US 2009/0159743 décrit également un système de trappes (système à cinq trappes) à ouverture latérale et par pivotement, y compris pour la trappe pantalon.

Le document US 7 458 542 décrit un système d'ouverture et de fermeture dans lequel les trappes avant ont un double mouvement de rotation, de type oscillo-battant, de manière à adopter une position intermédiaire dans laquelle elles servent de capotage aérodynamique en amont du train déployé.

Le document FR 2 922 519 décrit un système de trappe pour case de train animée d'un mouvement de translation circulaire latérale à l'aide d'une articulation de type parallélogramme déformable. Un col de cygne assure le décollement de la trappe et son déplacement latéral, le parallélogramme déformable maintenant son orientation sensiblement horizontale.

Il convient de noter que l'entraînement de ces trappes ne s'effectue pas par l'intermédiaire de la jambe de train mais par l'intermédiaire de moyens de commande indépendant de type vérin actionnant une articulation de type col de cygne dédiée.

Au début de son mouvement d'ouverture ainsi qu'en fin de refermeture, le bras de levier exercé par ce vérin est extrêmement réduit, ce qui oblige le vérin à pouvoir développer une puissance d'autant plus importante et à être dimensionné en conséquence. Les articulations doivent être également dimensionnées en conséquence, ce qui se traduit par une augmentation non souhaitable de leur taille, encombrement et masse.

Il convient également de noter que le parallélogramme déformable est construit à partir d'un axe d'articulation transversal de la jambe de train d'atterrissage, ce qui induit des contraintes de positionnement du système d'articulation de la trappe.

Le document FR 2 911 321 quant à lui vise certains aéronefs, en particulier des avions-cargos destinés au fret, dans lesquels il existe certaines contraintes de positionnement du plancher.

Le document FR 2 911 321 mentionné décrit un système d'ouverture et de fermeture d'une case de train d'atterrissage comportant au moins une trappe secondaire s'ouvrant non plus latéralement mais longitudinalement, de façon à être dans le sens d'écoulement des fluides. La trappe est en outre animée d'un mouvement de translation circulaire la maintenant sensiblement parallèle au carénage de l'aéronef et à l'écoulement du fluide.

L'articulation de la trappe s'effectue par l'intermédiaire d'une articulation en col de cygne fixée de manière rotative, d'une part, au carénage, partie fixe de l'aéronef, et d'autre part, à la trappe.

L'entraînement de la trappe est associé à la jambe de train d'atterrissage et s'effectue par l'intermédiaire d'une bielle d'entraînement rigidement montée sur ladite jambe de train mais montée pivotante sur la trappe.

Le caractère fixe de la bielle d'entraînement permet d'assurer le guidage en translation de la trappe et son maintien dans un plan sensiblement parallèle aux lignes de l'aéronef.

En revanche, une telle architecture d'entraînement présente l'inconvénient d'être relative rigide et peu adaptable.

Le but de la présente invention est de résoudre les inconvénients mentionnés précédemment et vise à cet effet une case de train d'atterrissage d'un aéronef selon les revendications annexées. Les adjectifs proximal et distal sont employés par rapport à la jambe de train d'atterrissage. La bielle proximale est celle la plus proche de la jambe (située sensiblement vers le centre de la case de train) tandis que la bielle distale est celle la plus éloignée de la jambe (et située sensiblement au niveau d'un bord de la case de train).

Ainsi, grâce à un système selon l'invention, on conserve les avantages d'une ouverture de trappe selon une direction sensiblement longitudinale, tout en optimisant la gestion des efforts.

En effet, selon l'invention, le guidage de la trappe dans son mouvement de translation circulaire est distinct de son entraînement et chacune des pièces peut être dimensionnée de manière optimale selon la fonction qu'elle remplit.

Cela permet notamment d'utiliser des bielles de guidage plus légères, et donc moins coûteuses. En cas de rupture, elles peuvent également être remplacées indépendamment de la bielle d'entraînement de la trappe.

Il convient également de noter que les bielles de guidage travaillent alors essentiellement en traction et non plus en propulsion. On notera également que les bielles se situent sensiblement dans la direction des efforts appliqués, ce qui réduit tout effort de compression parasite et notamment les efforts latéraux susceptibles de causer une fatigue prématurée du système. Le dimensionnement des éléments peut ainsi être réduit en conséquence.

En outre, les efforts appliqués à la trappe par la bielle d'entraînement sont ainsi sensiblement constants tout au long de son mouvement et quelle que soit sa position. L'effort de bras de levier est toujours optimal.

Le système d'ouverture et de fermeture selon la présente demande est également plus facilement adaptable à de nombreux types de case de train d'atterrissage.

Selon un mode de réalisation préférentiel, la bielle de guidage distale est de type col de cygne. Une telle bielle permet notamment d'assurer une légère déformation initiale du parallélogramme d'articulation permettant un décollement de la trappe en début d'ouverture.

Selon une variante de réalisation, le système comprend plusieurs bielles de guidage distales et/ou plusieurs bielles de guidage proximales, dont les points de rattachement pivotants sont coaxiaux selon une direction transversale de l'aéronef.

Avantageusement, les plusieurs bielles sont liées entre elles, notamment par un croisillon de liaison. Il pourrait également être possible d'utiliser une liaison par un panneau (comportant par exemple une structure en nid d'abeille et des fibres de carbone), ou une liaison à partir de tubes, notamment des tubes de carbone ou d'aluminium.

De manière avantageuse, la bielle d'entraînement est rattachée à la jambe de train et / ou à la trappe par une liaison rotule.

Alternativement ou de manière complémentaire, la bielle d'entraînement est rattachée à la jambe de train et / ou à la trappe par une liaison pivotante, autour d'une direction sensiblement transversale de l'aéronef.

Avantageusement, le système comprend au moins un moyen de centrage et de positionnement de la trappe en position fermée.

De manière avantageuse, le système comprend au moins une butée apte à venir en contact, notamment en contact ponctuel, avec la trappe lorsque celle-ci est en position fermée.

La présente invention sera mieux comprise à la lumière de la description détaillée qui suit en regard des dessins annexés, parmi lesquels :
- la figure 1 est une représentation schématique de côté d'une partie avant d'un aéronef équipé d'un train d'atterrissage apte à être logé dans une case de train possédant une trappe arrière équipée d'un système d'ouverture et de fermeture selon l'invention (train sorti - trappe ouverte) ;
- les figures 2 et 3 sont des vues partielles en coupe transversale de la case de train de la figure 1 et du système d'articulation de la trappe arrière à différentes étapes au cours de son ouverture ;

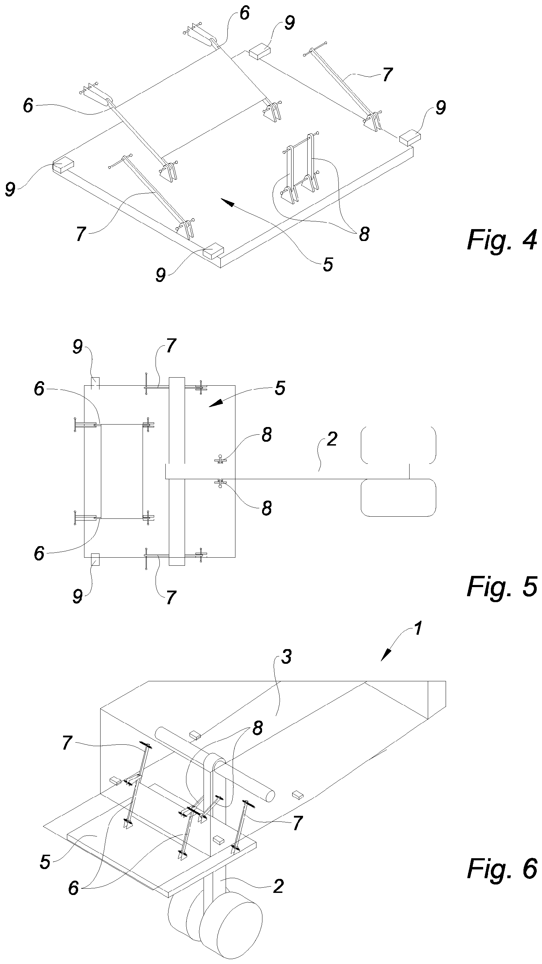

- la figure 4 est une représentation en perspective de la trappe arrière des figures 1 à 3 avec son système d'ouverture et de fermeture selon l'invention ;
- la figure 5 est une représentation d'ensemble des trappes équipant la case de train d'atterrissage ;
- la figure 6 est une représentation schématique en perspective de la trappe arrière et de son système d'ouverture et de fermeture en position ouverte.

Comme expliqué précédemment, la présente demande vise un système d'ouverture et de fermeture d'une trappe d'une case de train d'atterrissage d'un aéronef 1, et vise également une case de train comportant un tel système.

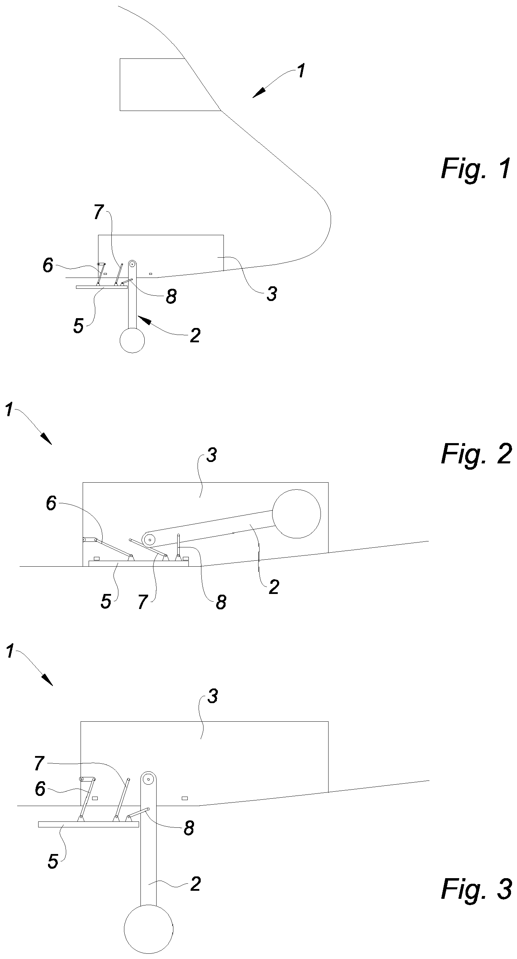

Comme représenté sur la figure 1, l'aéronef 1 comprend un train d'atterrissage avant comportant un ensemble de roues (non référencées) montées à une extrémité d'une jambe 2 du train.

En vol, lorsque le train d'atterrissage est inutilisé, il est rétracté à l'intérieur d'un logement adapté situé dans le fuselage ou à l'intérieur d'un carénage de l'aéronef 1 et appelé case 3 de train d'atterrissage.

Afin de permettre son déploiement la jambe 2 du train est montée pivotante sur une structure fixe de l'aéronef.

Pour assurer le profil aérodynamique du fuselage en vol, la case 3 du train est fermée par un ensemble de trappes comprenant deux trappes avant (non représentées) et une trappe arrière 5.

Les trappes avant sont destinées à permettre le passage des roues et d'une partie basse de la jambe 2 et sont refermées après déploiement du train. Elles sont ouvrables latéralement par pivotement et sont montées sur des articulations de type col de cygne réparties longitudinalement.

La trappe arrière 5 est destinée à permettre le passage du haut de la jambe 2 du train et, conformément à la présente demande, s'ouvre longitudinalement vers l'arrière de l'aéronef.

Conformément à la présente demande, la trappe arrière 5 est associée à un système d'ouverture et de fermeture comprenant :
- une paire de bielles de guidage proximales 7 (en l'occurrence amont par rapport à l'aéronef et direction d'avancement) présentant une première extrémité rattachée de manière pivotante, autour d'une direction transversale de l'aéronef, à la trappe 5 et une deuxième extrémité rattachée de manière pivotante, autour d'une direction transversale de l'aéronef 1, à une structure fixe intérieure de la case 3 de train ;
- une paire de bielles de guidage distales 6 présentant une première extrémité rattachée de manière pivotante, autour d'une direction transversale de l'aéronef, à la trappe 5 et une deuxième extrémité rattachée de manière pivotante, autour d'une direction transversale de l'aéronef 1 , à une structure fixe intérieure de la case 3 de train ;
- les bielles de guidage proximales 7 formant avec les bielles de guidage distales 6 une articulation de type parallélogramme déformable ; et
- une paire de bielles d'entraînement 8 présentant chacune une première extrémité rattachée de manière articulée à la trappe 5 et une deuxième extrémité rattachée de manière articulée à la jambe 2 de train d'atterrissage.

Plus précisément, les bielles de guidage distales 6 sont de type col de cygne.

Les bielles 6, 7, 8 sont fixées par l'intermédiaire de platines de fixations adaptées.

En outre, les bielles 6, 7, 8 appariées ont des points de rattachement pivotants qui sont coaxiaux selon une direction transversale de l'aéronef. Par ailleurs, les bielles distales 6 en col de cygne sont solidarisées entre elles par un croisillon de liaison de manière à former un berceau de la trappe 5.

Les bielles d'entraînement 8 sont rattachées, d'une part, à la trappe 5 par une liaison pivotante autour d'une direction sensiblement transversale de l'aéronef, et d'autre part, à la jambe 2 de train par une liaison rotule.

Le fonctionnement du système d'ouverture et de fermeture de la trappe va maintenant être décrit en référence aux figures 2 et 3.

En position initiale fermée, telle que montrée sur la figure 2, la trappe 5 est maintenue au train d'atterrissage et plus précisément retenue par la jambe 2 de train par les bielles d'entraînement 8.

De manière avantageuse, les bielles d'entraînement 8 sont sensiblement perpendiculaires au plan de la trappe 5 afin de réduire l'angle d'ouverture au minimum, et ainsi limiter les efforts parasites.

La première phase d'ouverture de la trappe 5 consiste à décoller légèrement la trappe 5 de l'ouverture de la case pour la faire échapper des joints et de la structure. Il s'agit d'un léger mouvement de translation vertical initial permis notamment par les cols de cygne.

Les bielles d'entraînement 8 assurent la synchronisation de l'ouverture de la trappe 5 avec le déploiement de la jambe 2 de train.

Grâce à ses bielles distales 6 et proximales 7 formant ensemble un parallélogramme déformable, la trappe 5 suit un mouvement de translation circulaire et conserve sensiblement son horizontalité de manière à limiter les efforts aérodynamiques.

En position ouverte (figure 3), la trappe 5 se trouve derrière le train et la jambe 2 en équilibre statique avec les bielles de guidage distales et proximales 6, 7 ainsi qu'avec les bielles d'entraînement 8.

La géométrie de l'ensemble est optimisée pour ouvrir au maximum le triangle des efforts statiques.

La trappe 5 est protégée derrière le train d'atterrissage dans une position quasiment horizontale.

L'ensemble pourra comprendre également des butées de positionnement et de calage de la trappe 5 en position fermée ainsi que des moyens déverrouillables de retenue de la trappe.

Les bielles de guidage 6, 7 et d'entraînement 8 sont des éléments nécessaires au mouvement de la trappe 5 et sont par conséquent dimensionnés en statique et en dynamique avec les cas de chargement issus de l'ouverture et de la fermeture de la trappe 5.

Les bielles d'entraînement 8 ainsi que des butées 9 de réception et de positionnement de la trappe 5 sont des éléments nécessaires au maintien en position de la trappe lors des phases de vol et sont dimensionnés en fatigue avec des efforts cycliques.

Grâce à l'invention, les fonctions d'entraînement et de guidage de la trappe 5 sont ainsi dissociées. Les bielles d'entraînement 8 sont les seuls éléments participant aux deux fonctions.

Le dimensionnement des éléments s'en retrouve grandement simplifié et les différentes pièces peuvent être allégées.

Dans le cas de trappes arrière, il sera plus facile de ne mettre en oeuvre qu'une seule trappe au lieu des deux trappes habituelles (la case de train comportant alors trois trappes en tout : deux trappes avant et une trappe arrière).

Ainsi, grâce à un système selon la présente demande, il a été possible de d'optimiser la masse des bielles de guidage distales 6 (cols de cygne).

Par rapport à un système de case de train à 5 trappes classiques, le système selon la présente demande peut permettre d'alléger l'ensemble de manière importante.

Le système est également plus aisément adaptable à tout type d'aéronef et de case de train.

## Revendications

1. Case (3) de train d'atterrissage d'un aéronef (1) comprenant au moins une trappe (5) montée mobile entre une position de fermeture de la case et une position d'ouverture, la trappe étant articulée à l'aide d'un système d'ouverture et de fermeture , entre la position de fermeture dans laquelle ladite trappe permet au moins en partie la fermeture de la case de train et assure une continuité au moins partielle avec une paroi externe de l'aéronef, et la position d'ouverture dans laquelle la trappe ouvre la case de train et est déplacée selon une direction sensiblement longitudinale dudit aéronef, la case (3) étant **caractérisée en ce que** ledit système d'ouverture et de fermeture comprend :
- au moins une bielle de guidage proximale (7) présentant une première extrémité rattachée de manière pivotante, autour d'une direction transversale de l'aéronef, à la trappe et une deuxième extrémité rattachée de manière pivotante, autour d'une direction transversale de l'aéronef, à une structure fixe intérieure de la case de train,
- au moins une bielle de guidage distale (6) présentant une première extrémité rattachée de manière pivotante, autour d'une direction transversale de l'aéronef, à la trappe et une deuxième extrémité rattachée de manière pivotante, autour d'une direction transversale de l'aéronef, à une structure fixe intérieure de la case de train,
- la bielle de guidage proximale (6) et la bielle de guidage distale (7) étant agencées de manière à former une articulation de type parallélogramme déformable,
- au moins une bielle d'entraînement (8) et présentant une première extrémité rattachée de manière articulée à la trappe et une deuxième extrémité apte à être rattachée de manière articulée à une jambe de train (2) d'atterrissage.

2. Case (3) de train d'atterrissage selon la revendication 1, **caractérisée en ce que** la bielle de guidage distale (6) est de type col de cygne.

3. Case (3) de train d'atterrissage selon l'une quelconque des revendications 1 ou 2, **caractérisée en ce que** le système d'ouverture et de fermeture comprend plusieurs bielles de guidage distales (6) et/ou plusieurs bielles de guidage proximales (7), conformées pour que les points de rattachement pivotants soient coaxiaux selon une direction transversale de l'aéronef.

4. Case (3) de train d'atterrissage selon la revendication 3, **caractérisée en ce que** les plusieurs bielles (6) sont liées entre elles, notamment par un croisillon de liaison.

5. Case (3) de train d'atterrissage selon l'une quelconque des revendications 1 à 4, **caractérisée en ce que** la bielle d'entraînement (8) est apte à être rattachée à la jambe de train (2) et / ou à la trappe (5) par une liaison rotule.

6. Case (3) de train d'atterrissage selon l'une quelconque des revendications 1 à 5, **caractérisée en ce que** la bielle d'entraînement (8) est apte à être rattachée à la jambe de train (2) et / ou à la trappe (5) par une liaison pivotante, autour d'une direction sensiblement transversale de l'aéronef.

7. Case (3) de train d'atterrissage selon l'une quelconque des revendications 1 à 6, **caractérisée en ce que** le système d'ouverture et de fermeture comprend au moins un moyen de centrage et de positionnement de la trappe (5) en position fermée.

8. Case (3) de train d'atterrissage selon l'une quelconque des revendications 1 à 7, **caractérisée en ce que** le système d'ouverture et de fermeture comprend au moins une butée (9) apte à venir en contact, notamment en contact ponctuel, avec la trappe (5) lorsque celle-ci est en position fermée.

## Patentansprüche

1. Fahrwerksfach (3) eines Luftfahrzeugs (1), zumindest eine Klappe (5) umfassend, die zwischen einer Schließposition des Faches und einer Öffnungsposition beweglich montiert ist, wobei die Klappe mithilfe eines Öffnungs- und Schließsystems zwischen der Schließposition, in der die besagte Klappe zumindest teilweise das Schließen des Fahrwerksfaches ermöglicht und für die zumindest teilweise Kontinuität mit einer Außenwand des Luftfahrzeuges sorgt, und der Öffnungsposition angelenkt ist, in der die Klappe das Fahrwerksfach öffnet, und in eine im Wesentlichen longitudinale Richtung des besagten Luftfahrzeugs bewegt wird, wobei das Fach (3) **dadurch gekennzeichnet ist, dass** das besagte Öffnungs- und Schließsystem umfasst:
- zumindest ein proximales Führungsgestänge (7), das ein erstes Ende aufweist, das um eine querlaufende Richtung des Luftfahrzeugs drehbar an der Klappe angebunden ist, und ein zweites Ende, das um eine querlaufende Richtung des Luftfahrzeugs drehbar an einer feststehenden inneren Struktur des Fahrwerksfaches angebunden ist,
- zumindest ein distales Führungsgestänge (6), die ein erstes Ende aufweist, das um eine querlaufende Richtung des Luftfahrzeugs drehbar an der Klappe angebunden ist, und ein zweites Ende, das um eine querlaufende Richtung des Luftfahrzeugs drehbar an einer feststehenden inneren Struktur des Fahrwerksfaches angebunden ist,
- wobei das proximale Führungsgestänge (6) und das distale Führungsgestänge (7) angeordnet sind, um ein Gelenk in der Art eines verformbaren Parallelogramms zu bilden,
- zumindest ein Antriebsgestänge (8), und ein erstes Ende aufweisend, das in gelenkiger Form an der Klappe angebunden ist, und ein zweites Ende, das imstande ist, in gelenkiger Form an einem Fahrwerksbein (2) angebunden zu werden.

2. Fahrwerksfach (3) nach Anspruch 1, **dadurch gekennzeichnet, dass** das distale Führungsgestänge (6) in der Art eines Schwanenhalses ausgeführt ist.

3. Fahrwerksfach (3) nach einem der Ansprüche 1 oder 2, **dadurch gekennzeichnet, dass** das Öffnungs- und Schließsystem mehrere distale Führungsgestänge (6) und/ oder mehrere proximale Führungsgestänge (7) umfasst, die übereinstimmend sind, damit die Drehanbindungsstellen koaxial in eine querlaufende Richtung des Luftfahrzeuges sind.

4. Fahrwerksfach (3) nach Anspruch 3, **dadurch gekennzeichnet, dass** die mehreren Gestänge (6) vor allem durch ein Verbindungskreuzstück miteinander verbunden sind.

5. Fahrwerksfach (3) nach einem der Ansprüche 1 bis 4, **dadurch gekennzeichnet, dass** das Antriebsgestänge (8) imstande ist, durch eine Kugelgelenksverbindung an das Fahrwerksbein (2) und/ oder an die Klappe (5) angebunden zu werden.

6. Fahrwerksfach (3) nach einem der Ansprüche 1 bis 5, **dadurch gekennzeichnet, dass** die das Antriebsgestänge (8) imstande ist, durch eine um eine im Wesentlichen querlaufende Richtung des Luftfahrzeugs herumführende Drehverbindung an das Fahrwerksbein (2) und/ oder an die Klappe (5) angebunden zu werden.

7. Fahrwerksfach (3) nach einem der Ansprüche 1 bis 6, **dadurch gekennzeichnet, dass** das Öffnungs- und Schließsystem zumindest ein Zentrier- und Positioniermittel der Klappe (5) in der geschlossenen Position umfasst.

8. Fahrwerksfach (3) nach einem der Ansprüche 1 bis 7, **dadurch gekennzeichnet, dass** das Öffnungs- und Schließsystem zumindest einen Anschlag (9) umfasst, der imstande ist, in Kontakt, vor allem in punktuellen Kontakt, mit der Klappe (5) zu kommen, wenn diese in der geschlossenen Position ist.

## Claims

1. A landing gear casing (3) of an aircraft (1) comprising at least one hatch (5) movably mounted between a closed position of the casing and an open position, the hatch being hinged using an opening and closing system, between the closed position in which said hatch allows at least partially the closing of the gear casing and ensures an at least partial continuity with an outer wall of the aircraft, and the open position in which the hatch opens the gear casing and is displaced according to a substantially longitudinal direction of said aircraft, the casing (3) being **characterized in that** said opening and closing system comprises:
- at least one proximal guide rod (7) having a first end pivotally attached, about a transverse direction of the aircraft, to the hatch and a second end pivotally attached, about a transverse direction of the aircraft, to an inner fixed structure of the gear casing,
- at least one distal guide rod (6) having a first end pivotally attached, about a transverse direction of the aircraft, to the hatch and a second end pivotally attached, about a transverse direction of the aircraft, to an inner fixed structure of the gear casing,
- the proximal guide rod (6) and the distal guide rod (7) being arranged so as to form a hinge of the deformable parallelogram type,
- at least one drive rod (8) and having a first end attached in a hinged manner to the hatch and a second end able to be attached in a hinged manner to a landing gear strut (2).

2. The landing gear casing (3) according to claim 1, **characterized in that** the distal guide rod (6) is of the gooseneck type.

3. The landing gear casing (3) according to any one of claims 1 or 2, **characterized in that** the opening and closing system comprises several distal guide rods (6) and/or several proximal guide rods (7), shaped so that the pivot attachment points are coaxial according to a transverse direction of the aircraft.

4. The landing gear casing (3) according to claim 3, **characterized in that** the several rods (6) are connected together, in particular by a connecting spider.

5. The landing gear casing (3) according to any one of claims 1 to 4, **characterized in that** the drive rod (8) is able to be attached to the gear strut (2) and/or to the hatch (5) by a ball-joint connection.

6. The landing gear casing (3) according to any one of claims 1 to 5, **characterized in that** the drive rod (8) is able to be attached to the gear strut (2) and/or to the hatch (5) by a pivot connection, about a substantially transverse direction of the aircraft.

7. The landing gear casing (3) according to any one of claims 1 to 6, **characterized in that** the opening and closing system comprises at least one means for centering and positioning the hatch (5) in the closed position.

8. The landing gear casing (3) according to any one of claims 1 to 7, **characterized in that** the opening and closing system comprises at least one stop (9) able to come into contact, in particular into point-contact, with the hatch (5) when said hatch is in the closed position.
